Europäisches Patentamt

European Patent Office

Office européen des brevets

(11) Publication number: **0 153 037**
**B1**

## EUROPEAN PATENT SPECIFICATION

(45) Date of publication of patent specification: **12.04.89**

(51) Int. Cl.⁴: **G 11 B 5/127**

(21) Application number: **85300564.3**

(22) Date of filing: **29.01.85**

(54) Magnetic head.

(30) Priority: **01.02.84 JP 16795/84**

(43) Date of publication of application:
**28.08.85 Bulletin 85/35**

(45) Publication of the grant of the patent:
**12.04.89 Bulletin 89/15**

(84) Designated Contracting States:
**DE FR GB IT NL**

(56) References cited:
**US-A-4 385 334**

**PATENT ABSTRACTS OF JAPAN, vol. 5, no. 60, 23rd April 1981, page 100 P 58 (P-58) (732); & JP-A-56-13514 (OLYMPUS) 09-02-1981**

**PATENT ABSTRACTS OF JAPAN, vol. 6, no. 229, 16th November 1982, page (P-155) (1107); & JP-A-57-130221 (SUWA SEIKOSHA) 12-08-1982**

**PATENT ABSTRACTS OF JAPAN, vol. 5, no. 154, 29th September 1981, page (P-82) (826); & JP-A-56-87216 (TOKYO SHIBAURA) 15-07-1981**

(73) Proprietor: **OLYMPUS OPTICAL COMPANY LIMITED**
**43-2, 2-chome, Hatagaya Shibuya-ku Tokyo 151 (JP)**

(72) Inventor: **Imamura, Tatsuo**
**c/o Olympus kyodo-Jutaku 126 7-14-11 Owada-cho Hachioji-shi Tokyo (JP)**
Inventor: **Yamamoto, Hiroyuki**
**Olympus Owada-Ryo (No. 3) 401 5-19-10, Owada-Cho**
**Hachioji-shi Tokyo (JP)**
Inventor: **Yunoki, Yutaka**
**c/o Vira Kunitachi 402 4-23-11, Higashi Kunitachi-Shi Tokyo (JP)**

(74) Representative: **Jones, Colin et al**
**W.P. THOMPSON & CO. Coopers Building Church Street**
**Liverpool L1 3AB (GB)**

(56) References cited:
**PATENT ABSTRACTS OF JAPAN, vol. 6, no. 112, 23rd June 1982, page (P-124) (990); & JP-A-57-40718 (SUWA SEIKOSHA) 06-03-1982**

# EP  0 153 037  B1

(56) References cited:

**PATENT ABSTRACTS OF JAPAN, vol. 8, no. 23,
31st January 1984, page (P-251) (1460); &
JP-A-58-179905 (MATSUSHITA) 21-10-1983**

# EP 0 153 037 B1

**Description**

The present invention relates to a magnetic head and, more particularly to a magnetic head for recording information signals by magnetization of a magnetic recording medium and for reproducing signals recorded on the recording medium.

Japanese document 58—179905(A) discloses a magnetic recording and reproducing device having a recording pole and a reproducing pole fixed to a common head fixing stage, the gap lengths of which poles are different in the recording and reproducing modes.

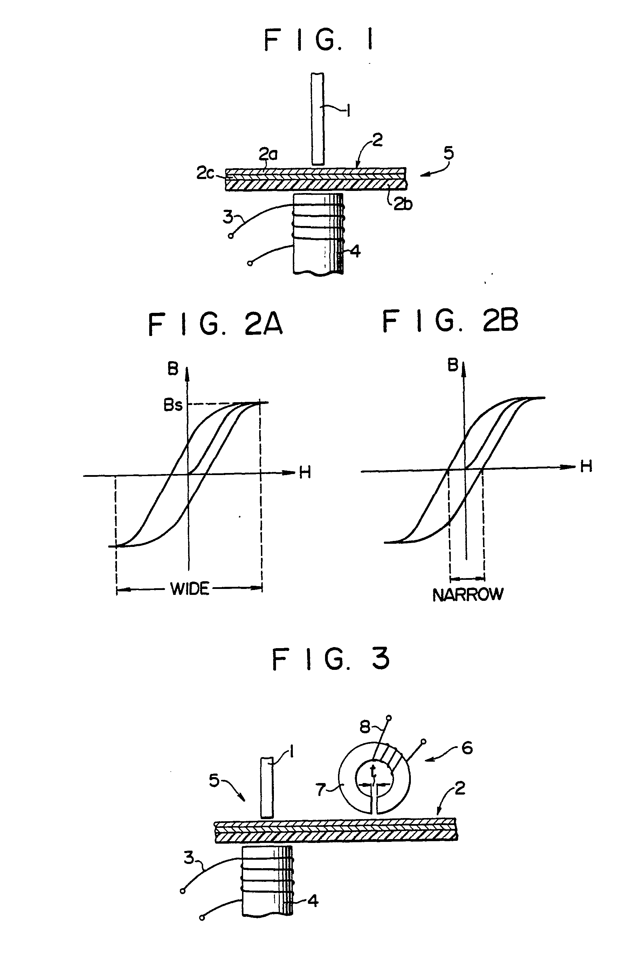

Recently, a magnetic head 5 of the auxiliary magnetic pole excitation type as shown in Fig. 1 of the accompanying drawings is considered to have a bright future as a perpendicular magnetic head which records the information signals by perpendicular magnetization of the recording medium. Such a magnetic head is hereinafter and in the claims called a "perpendicular magnetic head" and such a recording medium is hereinafter called a "perpendicular magnetic recording medium". The magnetic head 5 includes a main magnetic pole 1 formed of a magnetic thin film having high permeability and an auxiliary magnetic pole 4 formed of a blank of magnetic substance having high permeability and on which a winding 3 is provided. The two poles 1, 2 are arranged so that a perpendicular magnetic recording medium 2 can be interposed therebetween. The recording medium 2 comprises a base film or substrate 2a, a high permeability layer 2c on the base film 2a and a magnetic layer 2a on the high permeability layer 2c. When recording information signals on the recording medium 2, the main magnetic pole 1 is magnetized by a signal current flowing through the winding 3 around the auxiliary magnetic pole 4 and the magnetic layer 2a of the recording medium 2 is perpendicularly magnetized by the perpendicular magnetic field which has been developed by the magnetization of the main magnetic pole 1. When reproducing recorded signals, the main magnetic pole 1 is magnetized by the magnetic field which has been developed by the perpendicular magnetization of the recording medium 2 and signal voltages which are induced in the winding 3 by a change in the magnetization of the main magnetic pole 1 are picked up.

The magnetic head 5 features a strong interaction between the main magnetic pole 1 and the recording medium 2. Specifically, the magnetic flux from the main magnetic pole 1 is drawn into the recording medium so that only the perpendicular magnetic flux at the tip end of the main magnetic pole 1 is greatly concentrated. Since the spread of the magnetic flux is limited by thickness of the main magnetic pole 1, a sharp perpendicular magnetic field is developed regardless of recording levels. In addition, the magnetic head 5 advantageously applies the perpendicular magnetic field to the surface of the magnetic layer 2a of the recording medium 2 practically independently of accuracy of the centre axes position of both the magnetic poles 1, 4.

However, since the recording and reproducing operations are performed with the same magnetic head 5, it is difficult to improve their sensitivities. To improve the recording sensitivity, it is desirable that the main magnetic pole 1 be formed of a soft magnetic film having a high saturation magnetization. On the other hand, to improve the reproducing sensitivity, it is desirable that the main magnetic pole 1 be formed of a soft magnetic film having a high initial permeability $\mu i$. These are described with reference to the magnetization curves (hysteresis loops), shown in Figs. 2A asnd 2B of the accompanying drawings. Fig. 2A shows the reacting range (indicated by the arrow with a designation "WIDE") to the intensity of the magnetic field which can be supplied to the main pole 1 at the recording operation mode. Fig. 2B shows the reacting range (indicated by the arrow with a description "NARROW") to the intensity of the magnetic field induced by the magnetic recording medium 2 at the reproducing or play-back operation mode. As can be seen from Fig. 2A, in the recording mode, a relatively wide range of the magnetic field is applied in practice by a recording current corresponding to information signals to be recorded, and the magnetic field is applied to the main pole 1 for inducing a concentrated magnetic flux from it so as to perform the perpendicular recording. Therefore, the higher the saturation magnetization (i.e. saturation magnetic flux density Bs shown in Fig. 2A) of the main pole 1, the higher the strength of the magnetic recording, in the recording process should be performed. On the other hand, in the reproducing process, the intensity of the magnetic field can take merely a relatively narrow range as shown in Fig. 2B, since the magnetic field issues from the magnetic recording medium 2 on which information signals are previously recorded. Therefore the initial permeability $\mu i$ (i.e. gradient of the curve in the region of low intensity of the magnetic field shown in Fig. 2B) of the main pole 1 is required to be high enough to obtain a high reproduction sensitivity, whereas the saturation magnetization (Bs) can be inconsiderable in the reproducing process. Accordingly, it is preferred that the main magnetic pole 1 is formed of a substance having both the high saturation magnetization Bs and high initial permeability $\mu i$. However, it is difficult, in general, to prove both of them. By way of example, an amorphous film made of alloys of three elements of Co (Cobalt)-Zr (Zirconium)-Nb (Niobium) are such that, with increasing Co content, the saturation magnetization Bs is raised and the initial permeability $\mu i$ decreases.

In view of the foregoing, it is preferred that recording and reproducing magnetic heads are separately provided for respective exclusive uses. To this end, there has been hitherto proposed a magnetic head shown in Fig. 3, for example, which effects the recording and reproducing operations using two magnetic heads, an auxiliary pole excitation type recording head 5 and a well-known ring type reproducing head 6 with a winding 8 coiled around a ring-shaped magnetic body 7. With the described magnetic head, when the recording density of information is not very high, the ring type head 6 has a good resolving power and a

3

high reproduction sensitivity to read recorded signals satisfactorily. However, when recording at a high density of more than 100 KBPI ($10^5$ Bits Per Inch, i.e. 3937 Bits per mm), it is difficult to read recorded signals with the ring type head 6. Presently, since a gap width t of the head 6 is approximately 0.2 μm at the minimum, it is impossible, in principle, to resolve and reproduce a recorded bit less than this width and the resolution and reproduction sensitivity is only on the level of nearly 0.3 ~ 0.4 μm. Therefore, it is necessary for the recording operation of density more than 100 KBPI to particularly employ a reproducing head for exclusive use which is different from the head 6.

Furthermore, there have been proposed other conventional perpendicular magnetic heads as disclosed in (1) Japanese Laid-Open Patent Application No. 169,212/1981, (2) Japanese Laid-Open Patent Application No. 203,216/1982 and (3) Japanese Laid-Open Patent Application No. 13,514/1981. The (1) patent application discloses a magnetic head fundamentally employing the ring type head 6 and therefore has the disadvantage mentioned above. The (2) patent application discloses a magnetic head in which main magnetic poles are arranged at regular intervals on a rotary member such that video tracks are formed at high speed by rotating the rotary member in a direction perpendicular to a running direction of a video tape. However, this magnetic head, although the main magnetic poles are formed in a unitary body, is not used by separating the recording and reproducing operations. The (3) patent application discloses a magnetic head in which both recording and reproducing heads are united and a main magnetic pole of the magnetic head is changeable in its thickness between recording and reproducing operations to improve accuracy of the azimuth adjustment and the resolving-power in the reproducing operation.

It is an object of the present invention to provide a perpendicular magnetic head which perpendicularly records information signals on a perpendicular magnetic recording medium and reproduces signals perpendicularly recorded in a most efficient manner.

A perpendicular magnetic head of the present invention is characterised in that the main recording pole contains a soft magnetic film having a relatively high saturation magnetization and the main reproducing pole contains a soft magnetic film having a relatively high initial permeability and is disposed at a predetermined distance from the main recording pole.

Since main recording and reproducing poles are provided separately, the main recording pole being formed of a soft magnetic film having a high saturation magnetization and the main reproducing pole being formed of a soft magnetic film having a high initial permeability, both recording and reproducing operations can be efficiently achieved in the optimum conditions.

The invention is further described, by way of example, with reference to the accompanying drawings of which Figs. 1 to 3 having already been described and in which:—

Fig. 1 is an elevation illustrating an example of a conventional perpendicular magnetic head;

Figs. 2A and 2B are graphs of the magnetization curves (hysteresis loops) showing magnetization characteristics in recording and reproducing processes, respectively;

Fig. 3 is a front view illustrating another example of a conventional perpendicular magnetic head;

Fig. 4 is a perspective view of a perpendicular magnetic head according to a first embodiment of the present invention;

Fig. 5 is an elevation of a perpendicular magnetic head according to a second embodiment of the present invention;

Fig. 6 is an elevation of a perpendicular magnetic head according to a third embodiment of the present invention;

Fig. 7 is an elevation of a perpendicular magnetic head according to a fourth embodiment of the present invention;

Fig. 8 is an elevation of a perpendicular magnetic head according to a fifth embodiment of the present invention;

Fig. 9 is an elevation of a perpendicular magnetic head according to a sixth embodiment of the present invention;

Fig. 10 is an elevation of a perpendicular magnetic head according to a seventh embodiment of the present invention;

Fig. 11 is an elevation of a perpendicular magnetic head according to a eighth embodiment of the present invention;

Fig. 12 is a perspective view of a perpendicular magnetic head according to a ninth embodiment of the present invention;

Figs. 13 to 17 are perspective views illustrating respective modified versions of a magnetic head substrate having main recording and reproducing poles according to the present invention;

Fig. 18 is a perspective view of a perpendicular magnetic head according to a tenth embodiment of the present invention;

Fig. 19 is a sectional view taken along line X—X of the magnetic head shown in Fig. 18; and

Fig. 20 is a bottom view from a recording medium side of the magnetic head shown in Fig. 18.

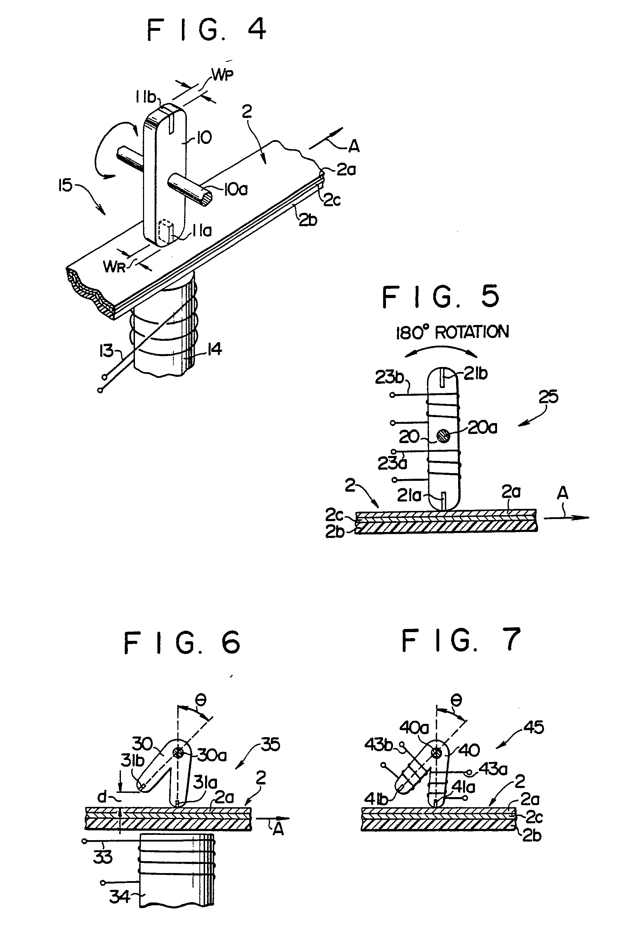

Referring now to Fig. 4, a perpendicular magnetic head 15 of the present invention includes a main recording pole 11a and a main reproducing pole 11b which are both provided on a substrate or support 10 in a unitary manner. The support 10 is rotatably mounted on a rotary shaft 10a. The head 15 is a magnetic head of the auxiliary pole-excitation type in which an auxiliary pole 14, which is made of a block of magnetic substance having a high permeability and around which a winding 13 is coiled, is arranged so that a perpendicular magnetic recording medium 2 (in the following description referred to as a recording medium) can be interposed between the support 10 and the auxiliary pole 14. The recording medium 2 has a magnetic layer 2a which is formed, with the interposition of a high permeability layer 2c, on a base film 2b, similarly to the recording medium shown in Fig. 1, and hereinafter the same reference symbols are employed for designating a corresponding portion. The support 10 which is made of a wear-resistant material, such as non-magnetic ferrite and ceramic is in an elongate form. The main poles 11a, 11b made of a soft magnetic film are arranged on the substrate 10 at longitudinally opposite ends thereof, respectively so as to be symmetrical with respect to the axis of the rotary shaft 10a which is centrally located in the support 10. The main recording pole 11a is made of a soft magnetic film having a high saturated magnetic flux density and the main reproducing pole 11b is made of a soft magnetic film having a high initial permeability. The support 10 is rotatable about the axis of the rotary shaft 10a penetrating therethrough. When recording, the main pole 11a, as shown in Fig. 4, is juxtaposed to the surface of the magnetic layer 2a of the recording medium 2 and is in opposing relationship with the auxiliary pole 14 with the recording medium 2 therebetween. When reproducing, the main pole 11b is juxtaposed to the surface of the magnetic layer 2a and is in opposing relationship with the auxiliary pole 14 with the recording medium 2 therebetween. Thus, the two main poles 11a, 11b are switched between the recording and reproducing positions by rotating the support 10 through 180°.

In the recording operation with the perpendicular magnetic head 15, as shown in Fig. 4, the main pole 11a is positioned downwardly so as to be in abutment with the magnetic layer 2a and then a current for magnetic recording of signals is caused to flow through the winding 13. The main pole 11a is magnetied by the magnetic field of the auxiliary pole 14 which has been produced by the current flowing through the winding 13 to produce the sharp perpendicular magnetic field at the tip end of the main pole 11a. As a result, the magnetic layer 2a is perpendicularly magnetized and the recording is performed on to the recording medium 2 which is running in the direction of arrow A.

In the reproducing operation, the support 10 is rotated through 180° from the described recording position to position the main pole 11b downwardly so as to be in abutment with the recording medium 2. Thereupon, the recording medium 2 is run horizontally in the longitudinal direction of arrow A. The main reproducing head 11b is thereby magnetized by the magnetic field which has been produced by the perpendicular magnetization of the recording medium 2. Voltages which are induced by a change of the magnetization of the main pole 11b are picked up by the winding 13 in the form of reproduced signals.

With the perpendicular magnetic head 15, good magnetic recording and reproducing properties of the recording medium 2 can be obtained. In addition, the magnetic head is simple in construction and easy to manufacture.

Now, the relation between track widths for the main recording and reproducing poles will be described. Assuming that a recording track width of the main pole 11a is $W_R$, a reproducing track width of the main pole 11b is $W_P$, a track width standard W on the recording medium 2 is 60 μm and a guard band is 40 μm, a recording head of a conventional horizontal magnetization type has the relation $W_R < W$, whereas it is possible for the perpendicular recording to have the relation $W_R = W$ because of no leakage of recorded flux in the direction of track width. However, it is preferred that a reproducing track width $W_P$ has the relation $W_P > W_R$ because of ease of tracking in the reproducing operation.

A perpendicular magnetic head 25 according to a second embodiment of the present invention shown in Fig. 5 is a magnetic head of the main pole excitation type without an auxiliary pole. The magnetic head 25, as in the first embodiment shown in Fig. 4, has a main recording pole 21a and a main reproducing pole 21b at the longitudinally opposite tip ends of an elongated substrate or support 20, respectively, so as to be symmetrical with respect to an axis 20a of rotation. The main pole 21a portion of the support 20 is provided with a winding 23a for applying a signal current for recording signals and the main pole 21b portion of the support 20 is provided with a winding 23b for picking up a voltage induced by magnetization of a recording medium 2. These windings 23a, 23b are not necessarily required to be separately coiled and may be provided such that both are continuously wound and an intermediate tap therebetween is provided as a common terminal.

Similarly, the main recording pole 21a is made of a soft magnetic film having a high saturation magnetization and the main reproduction pole 21b is made of a soft magnetic film having a high initial permeability. Since the support 20 having the main poles 21a, 21b is rotatable about the axis 20a in a plane perpendicular to the surface of the recording medium 2, the main pole 21a, when recording, is set so as to be juxtaposed to the recording medium 2, as shown in Fig. 5, and a signal current for magnetic recording is caused to flow through the winding 23a. As a result, the main pole 21a is magnetized by the current flowing through the winding 23a to develop the sharp perpendicular magnetic field at the tip end thereof; thus a magnetic layer 2a of the recording medium 2 is perpendicularly magnetized by the perpendicular magnetic field. When reproducing, the main pole 21b is set downwardly by rotating the support 20 through 180° so as to be juxtaposed to the recording medium 2. In this state, when the medium 2 is caused to run in the direction of arrow A, the main pole 21b is magnetized by the magnetic field developed by the perpendicular magnetization of the medium 2 and voltages induced by a change of the magnetization of the main pole 21b are picked up from the winding 23b.

Since the magnetic head 25 of this kind does not employ an auxiliary pole, its structure is simpler than that of the magnetic head 15 according to the first embodiment. In addition, the magnetic poles 21a, 21b

can be arranged on only one side of the recording medium 2 and a loading mechanism for the recording medium 2 is advantageously simplified accordingly.

A perpendicular magnetic head 35 according to a third embodiment of the present invention shown in Fig. 6 includes a substrate or support 30 which is composed of two arm portions in V shape having an apex angle θ and which is disposed so as to be rotatable about an axis 30a in a plane perpendicular to a recording medium 2. A main recording pole 31a and a main reproducing pole 31b are located at the tip ends of the respective arm portions. The main recording pole 31a is made of a soft magnetic film having a high saturation magnetization and the main reproduction pole 31b is made of a soft magnetic film having a high initial permeability. An auxiliary pole 34 on which a winding 33 is provided is disposed at a position opposed to the substrate 30 so that the recording medium 2 can be interposed therebetween.

With the magnetic head 35, when recording, the main pole 31a is in abutment with a magnetic layer 2a of the recording medium 2, as shown in Fig. 6 and, when reproducing, the main pole 31b is rotated through an angle of θ so as to be in abutment with the magnetic layer 2a. Thus, the shift between recording and reproducing positions is achievable by rotating the support 30 through the small shift angle θ.

While the magnetic head 35 shown in Fig. 6 is an auxiliary pole excitation type head, it is possible to modify the magnetic head to a main pole excitation type perpendicular magnetic head 45 according to a fourth embodiment of the present invention shown in Fig. 7. The magnetic head 45 includes a substrate or support 40 in the same shape as the support 30 shown in Fig. 6 and a main recording pole 41a and a main reproducing pole 41b both of which are on portions of the support 40 around which windings 43a, 43b are coiled, respectively. Accordingly, the magnetic head 45 is simple in construction as in the embodiment shown in Fig. 5 and enables a loading mechanism for the recording medium 2 to be simplified.

It should be understood that, with the magnetic heads 35, 45 shown in Figs. 6, 7, a distance of more than 10 µm between the magnetic layer 2a and the main pole not in an operational position, for example, the main pole 31b in Fig. 6, will be sufficient for operation. In addition, while the axis of rotation of the substrate in each embodiment shown in Figs. 4 to 7, is arranged in a direction perpendicular to the running direction of arrow A of the recording medium 2, the directional relationship may be freely chosen within the range of 0° to 90°.

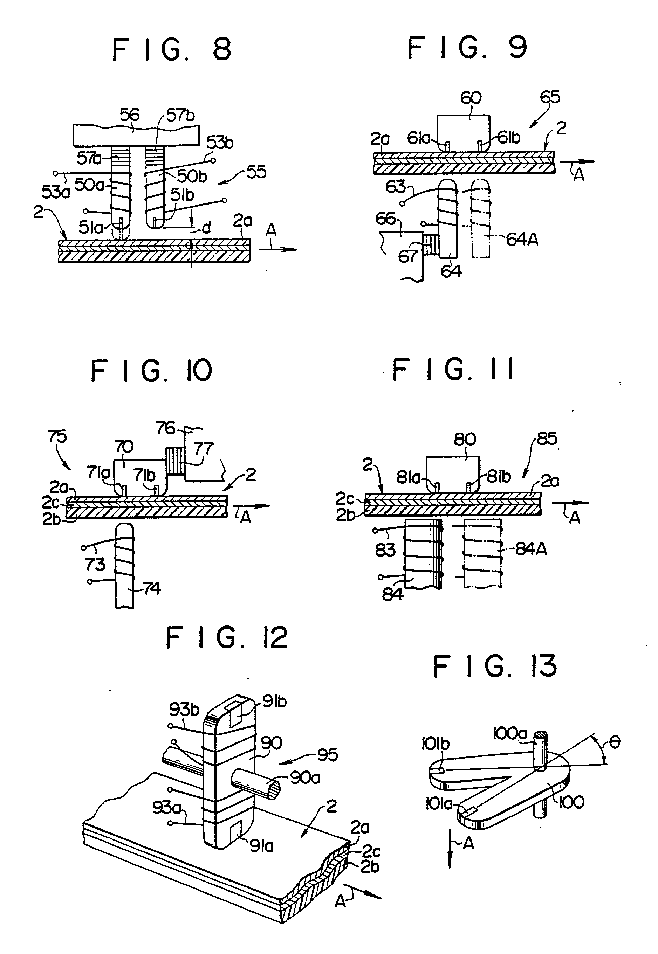

A perpendicular magnetic head apparatus 55 according to a fifth embodiment of the present invention shown in Fig. 8 is a main pole excitation type magnetic head. The magnetic head 55 has two substrates or supports 50a, 50b of vertically elongated shape which respectively include a main recording pole 51a and a main reproduction head 51b at the lower tip ends thereof, and which are vertically juxtaposed in opposing relationship with a magnetic layer 2a of the recording medium 2. The supports 50a, 50b are fixed to a mount 56 through the medium of a multi-layered piezo electric substance members 57a, 57b which are made of PZT (Zirconium Lead Titanate) or the like and which are located at the upper end portions of the supports 50a, 50b, respectively, under the condition that each of the main poles 51a, 51b is positioned so as to be in opposing relationship with the same track on the recording medium 2 while the latter runs in the direction of the arrow A. As in the foregoing embodiments, the main recording pole 51a is made of a soft magnetic film having a high saturation magnetization and the main reproduction pole 51b is made of a soft magnetic film having a high initial permeability. With the magnetic head 55, when recording, the piezo-electric member 57a is caused to lengthen in the direction of its laminations, that is, in the longitudinal direction of the support 50a by applying a voltage thereto, resulting in that the main pole 51a descends as shown in a phantom line to become in contact with the magnetic layer 2a. When reproducing, the piezo-electric member 57b is caused to lengthen in the longitudinal direction of the support 50b by applying a voltage thereto, resulting in that the main pole 51a descends to become in contact with the magnetic layer 2a. It should be understood that, for placing one of the main poles 51a, 51b in a position not in operation, a voltage of polarity opposite the voltage applied when lengthening as stated above may be applied to the one of the piezo-electric substance members 57a, 57b corresponding thereto to allow it to contract so as to be completely withdrawn from the recording medium 2. In either case, a withdrawal distance d between the main pole not in its operational position and the surface of the magnetic layer 2a is more than 10 µm. The magnetic head 55 has no mechanically driven part and therefore is durable.

A perpendicular magnetic head 65 according to sixth embodiment of the present invention shown in Fig. 9 includes a main recording pole 61a made of a soft magnetic film having a high saturation magnetization and a main reproduction pole 61b made of a soft magnetic film having a high initial permeability. Both poles are integrally mounted on a substrate or support 60 which is fixed to a mount (not shown). The main poles 61a, 61b are in abutment with the surface of a magnetic layer 2a of a recording medium 2 which is running in the direction of arrow A so as to be able to scan the same track surface. An auxiliary pole 64 on which a winding 63 is provided is disposed at a position opposing the support 60 so that the recording medium can be interposed therebetween. The auxiliary pole 64 is fixed to a stationary member 66 through the medium of a multi-layered piezo-electric substance member 67 which is secured to one side of the base portion of the auxiliary pole 64. The auxiliary pole 64, when the piezo-electric substance member 67 is not energized, is located at a position opposing the main recording pole 61a. Under this condition, the recording operation is achieved such that the main recording pole 61a is magnetized by a signal current flowing through the winding 63 for magnetic recording to record signals on the recording medium 2. The reproducing operation is performed in that the piezo-electric member 67 elongates in the direction of its laminations by applying a voltage thereto so that the auxiliary pole 64

6

displaces in the direction of arrow A to stand at a position 64A opposing the main reproduction pole 61b, which position is shown in a phantom line in Fig. 9, and the main reproducing pole 61b is then magnetized by the magnetic field developed by the perpendicular magnetization recorded on the magnetic layer 2a to obtain reproduced signals from the winding 63.

In the magnetic head 65 shown in Fig. 9, no moving member is on the main poles side and the auxiliary pole 64 is displaceable along the running direction of the recording medium 2 so as to be in opposing relationship with one or other of the main poles 61a, 61b when recording or reproducing, respectively. As a modification of the magnetic head 65, a perpendicular magnetic head 75 according to a seventh embodiment of the present invention is shown in Fig. 10, in which an auxiliary pole 74 is stationary and main poles 70a, 70b are displaceable in the direction of arrow A. Specially, the magnetic head 75 has a substrate or support 70 which includes a main recording pole 71a and a main reproduction pole 71b. The support 70 lies opposite the stationary auxiliary pole 74 on which a winding 73 is coiled. The support 70 is fixed to a stationary member 76 through the medium of a multi-layered piezo-electric substance member 77 which is attached to the side of the support 70. With the structure, when recording, the main pole 71a is in opposing relationship with the auxiliary pole 74, as shown in Fig. 10, with the piezo-electric member 77 de-energized to record information signals on the recording medium 2. When reproducing, the piezo-electric member 77 elongates in the direction of its lamination with the piezo-electric member 77 energized so that the main reproduction head 71b is brought into a position opposing the auxiliary pole 74 to read the perpendicular magnetization of the recording medium 2.

In the magnetic heads 65, 75 shown in Figs. 9, 10, the auxiliary poles 64, 74 have a fine-pointed tip end so as to be opposed to the main poles 61a, 71a or 61b, 71b, so that it is possible to construct the magnetic heads 65, 75 in a very compact manner. The thickness of the auxiliary poles 64, 74 relative to that of the soft magnetic film of the main poles can be of the same order as that of the main poles or can be up to several tens of times that of the main poles. However, if the thickness of the auxiliary pole is too small, it is difficult to bring the main and auxiliary poles into alignment. Taking this situation into consideration, there is proposed a perpendicular magnetic head 85 according to an eighth embodiment of the present invention shown in Fig. 11. The magnetic head 85 employs an auxiliary pole 84 of a conventional size on which a winding 83 is provided. The location of the auxiliary pole 84 is defined ingeniously in the present invention. Specifically, when recording, the right-hand end portion of the auxiliary pole 84 is in opposing relationship with a main recording pole 81a on a substrate or support 80. When reproducing, the auxiliary pole 84 is shifted to a position 84A shown in a phantom line so that the left-hand portion of the auxiliary pole 84 is in opposing relationship with a main reproduction pole 81b. Accordingly, even with an auxiliary pole of a comparatively thick size in conventional use, the recording and reproducing operations can be performed normally without magnetically affecting a main pole not in operation. It should be noted that, as a means for shifting the auxiliary pole 84 between the recording and reproducing positions, a multi-layered piezo-electric substance member or other mechanical shifting means may be utilized.

In the perpendicular magnetic heads according to the foregoing embodiments shown in Figs. 4 to 11, soft magnetic films of two main poles are integrally held on a substrate or support such that they are inserted in the tip ends of the support having a thickness corresponding to a track width of the main poles so that the track width is formed in the direction of thickness of the support (see Fig. 4). However, the soft magnetic films of the main poles may be provided by a sputtering process or the like on one tip side of the support.

By way of example, a perpendicular magnetic head 95 according to a ninth embodiment of the present invention, which is a modification of the magnetic head 25 shown in Fig. 5, is shown in Fig. 12. A substrate or support 90 has an axis of rotation 90a which is parallel to the running direction A of a recording medium 2 so as to be rotatable about an axis perpendicular to the axis of rotation of the support 20 shown in Fig. 5. A main recording pole 91a made of a soft magnetic film having a high saturation magnetization and a main reproduction pole 91b made of a soft magnetic film having a high initial permeability are formed on the same plane of the support 90 at the upper and lower end portions so as to be symmetrical with respect to the axis 90a by a sputtering process or the like. Windings 93a, 93b are coiled around these portions of the support 90. With the magnetic head 95, since soft magnetic films forming the main poles 91a, 91b can be formed by a sputtering process or the like on one side of the support 90, which side is polished with a good accuracy in surface roughness, an azimuth error when recording and reproducing is greatly reduced and thus accuracy is greatly improved compared with the magnetic head 25 shown in Fig. 5.

Similarly, a modification of the magnetic heads 35, 45 shown in Fig. 6, 7 is shown in Fig. 13. Soft, magnetic films of two main poles 101a, 101b are formed by a sputtering process or the like on one side of a substrate or support 100 which side is polished with a good accuracy in surface roughness. With this structure, the support 100 is rotated about an axis 100a when recording and reproducing to shift the main poles 101a, 101b through an angle θ in the direction of track width. Accordingly, when the track width is less than several tens of μm, the rotational angle θ can be reduced correspondingly, resulting in further improvement of accuracy in azimuth.

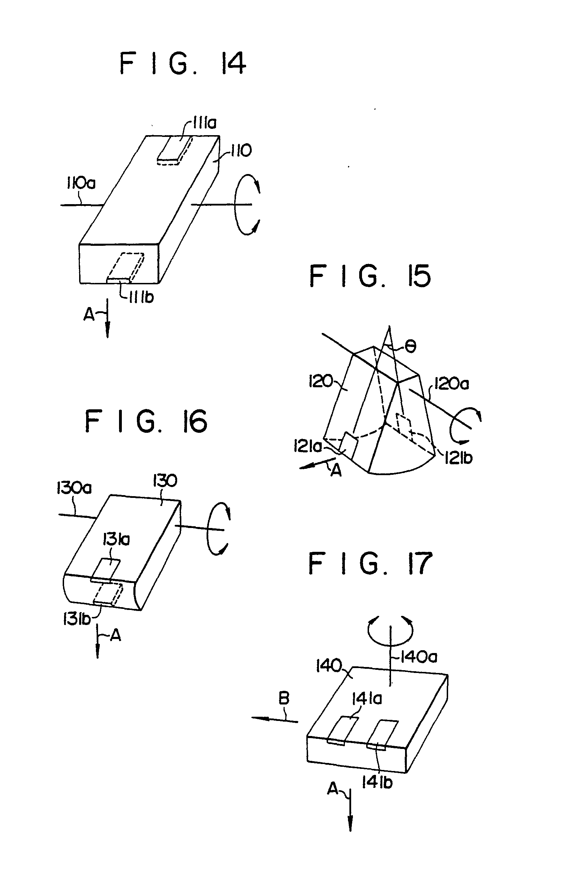

In addition to the foregoing, there are proposed a variety of modifications of the structure in which main poles are made of a soft magnetic film by a sputtering process or the like. One example is shown in Fig. 14. A main recording pole 111a made of a soft magnetic film is provided at the centre of an end edge of one surface of a substrate or support 110 in a pseudo-parallelepiped shaped block and a main reproducing

pole 111b made of a soft magnetic film is provided at the centre of the opposite end edge of the other surface of the support 110 and an axis of rotation 110a is provided so as to pass through the centres of opposite sides of the support 110. With the described structure, the main poles 111a, 111b are placed in position by rotating the support 110 about the axis 110a through 180° to shift between the recording and reproducing positions. Another example is shown in Fig. 15. A main recording pole 121a and a main reproducing pole 121b are provided at the lower end edges of opposite surfaces of a substrate or support 120 which has opposite sides in a fan shape and an axis of rotation 120a which is provided so as to pass through the opposite sides. The described structure, which is applicable to the magnetic head 35 shown in Fig. 6 as its modification, is simple and also it is possible to reduce the rotational angle θ.

A further modification is shown in Fig. 16. With a substrate or support 130 having opposite planes parallel, a main recording pole 131a and a main reproduction pole 131b are provided on the lower ends of the opposite planes, respectively, so as to be adjacent the bottom plane in a circular arc shape in section and be opposed to each other. With this structure, when the main pole 131a or 131b is brought into abutment with a recording medium by rotating the support 130 about the axis 130a, the main poles 131a, 131b are slightly inclined to the recording medium. Howver, since the rotational angle for shifting between recording and reproducing positions is reduced, there is no problem in practical use.

A still further modification is shown in Fig. 17. A main recording pole 140a and a main reproduction pole 141b are provided parallel to one another on one of the two parallel planes of a substrate or support. For switching between the recording and reproducing positions, the support 140 is displaced parallel to a surface of a recording medium 2 and in a direction perpendicular to the running direction A of the medium 2, that is, the direction of track width shown with an arrow B. As a means for displacing the support 140 in a direction of the arrow B the multi-layered piezo-electric member 77 shown in the embodiment shown in Fig. 10, for example, can be employed. Furthermore, it should be understood that an axis of rotation 140a may be provided on the support 140 so that the support 140 can be rotated about the axis 140a to switch between the recording and reproducing positions.

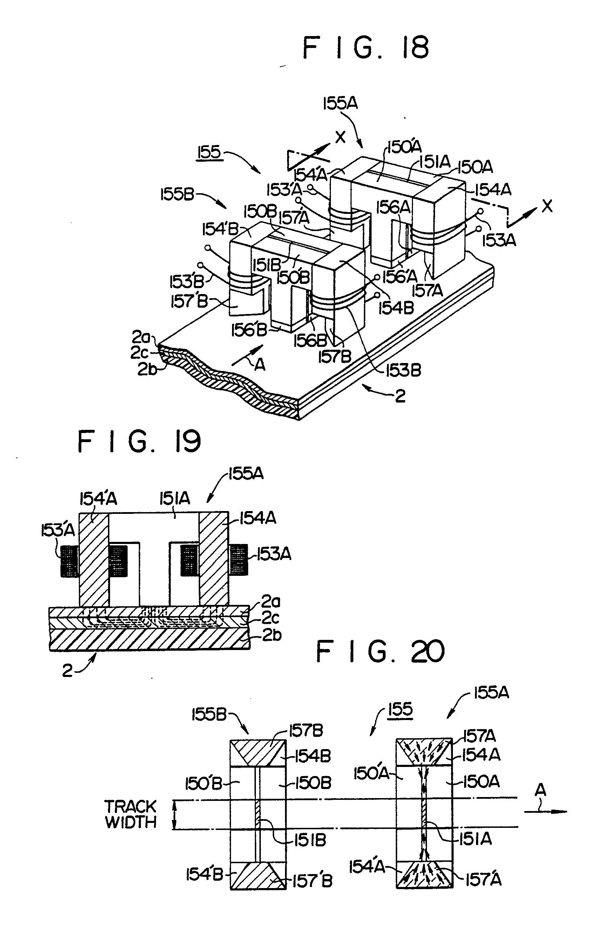

In a perpendicular magnetic head 155 according to a tenth embodiment of the present invention shown in Fig. 18, to which a perpendicular magnetic head which has been proposed recently (Japanese Patent Application No. 198755/1983) is applied, a pair of magnetic recording and reproduction heads 155A, 155B are arranged in a given interval along the running direction A of a recording medium 2.

The magnetic recording head 155A comprises a main pole 151A which is disposed such that its tip end plane is in abutment with the surface of a magnetic layer 2a of the recording medium 2, auxiliary poles 154A, 154'A which are arranged on opposite sides of the main pole 151A in a direction perpendicular to the running direction A of the recording medium 2 and windings 153A, 153'A which are coiled around the respective auxiliary poles 154A, 154'A. The main pole 151A is formed of a soft magnetic film having a high saturation magnetization and in a substantial T shape. The upper portion of the main pole 151a except for the vicinity of its tip end is held between substrates or supports 150A, 150'A in a T shape which are formed of a magnetic material having a high permeability such as Mn (Manganese)-Zn (Zinc) ferrite in a thick manner. With the described structure, the magnetic reluctance of the main pole 151A is advantageously reduced by the supports 150A, 150'A formed of the high permeability magnetic material. In addition, non-magnetic members 156A, 156'A, such as glass, are attached on both the tip end planes of the substrates 150A, 150'A which are adjacent to the tip end of the main pole 151A such that the contact resistance of the main pole 151A to the recording medium 2 is reduced so as to allow smooth contact therebetween. Further, auxiliary poles 154A, 154'A of a substantially square pillar shape are secured to the right and left-hand ends of the main pole 151A, respectively. The auxiliary poles 154A, 154'A have tapered portions 157A, 157'A for focusing magnetic flux which are formed, for example, at the lower end portions in contact with the recording medium 2, which portions are below body portions of the auxiliary poles 154A, 154'A on which windings 153, 153'A are provided such that both the side planes of the auxiliary poles 154A, 154'A in opposing relationship with the main pole 151A are tapered towards the main pole 151A. The end planes of the tapered portions 157A, 157'A in contact with the recording medium 2 are in a trapezoid shape which is symmetrical with respect to the longitudinal direction of the recording medium 2, as shown in Fig. 20. With the auxiliary poles 154A, 154'A having respective tapered portions 157A, 157'A thus formed, magnetic flux which reaches the main pole 151A from the auxiliary poles 154A, 154'A through a high permeability layer 2c of the recording medium 2 is converged as shown in Figs. 19, 20 to improve the recording density.

The magnetic reproducing head 155B has the same structure as that of the main pole 155A just described. Therefore, in the structure of the main pole 155B shown in Figs. 18 to 20, corresponding parts are given corresponding reference characters with the final letter A replaced by B and therefore a detailed description will be omitted. A distinction between the magnetic heads 155A, 155B is that, while the main pole 151A of the magnetic head 155A is formed of a soft magnetic film having a high saturation magnetization, the main pole 151B of the magnetic head 155B is formed of a soft magnetic film having a high initial permeability.

Since the magnetic heads 155A, 155B, as shown in Figs. 18 and 20, are juxtaposed in the longitudinal direction along the running direction A of the recording medium 2, both are on the same track (Fig. 20).

With the perpendicular magnetic head 155, when recording on the recording medium 2 by drawing a signal current for recording into the winding 153A, 153'A of the magnetic head 155A, magnetic flux from the auxiliary poles 154A, 154'A which have been activated by the signal current is converted in the tapered portions 157A, 157'A and reaches the main pole 151A through the magnetic layer 2a and the high permeability layer 2c of the recording medium 2 and further the magnetic layer 2a opposing the main pole 151A. At this time, residual magnetization is formed in the direction of thickness of the magnetic layer 2a opposing the main pole 151A and the signal is perpendicularly magnetically recorded.

When reproducing, a change in magnetic flux corresponding to information recorded on the magnetic layer 2a of the recording medium 2 is detected by the tip end of the main pole 151B of the magnetic head 155B and voltages corresponding to the change in magnetic flux are developed in the windings 153B, 153'B provided on the auxiliary poles 154B, 154'B which form a closed magnetic path. As a result, the recorded information can be reproduced by picking up the sum of output voltages from the windings 153B, 153'B.

Thus, it will be understood that with the perpendicular magnetic head 155, the main poles 151A, 151B which are made of a soft magnetic film suitable for respective magnetic properties for recording and reproducing operations are separately utilized for respective exclusive uses so that the recording and reproducing operations can be performed effectively. Further, since the magnetic head 155, which is of the auxiliary pole excitation type, can be constructed only on one side therefor opposing the magnetic layer 2a of the recording medium 2, it is advantageously possible to simplify a loading mechanism for the recording medium 2, a head actuator and the like. Still further, although the magnetic heads 155A, 155B are simultaneously in abutment with the recording medium 2, magnetic paths are separately formed between the main pole 151A and the auxiliary poles 154A, 154'A and between the main pole 151B and the auxiliary poles 154B, 154'B. As a result, there is little magnetic interference between the magnetic heads 155A, 155B.

As a modification of the perpendicular magnetic head 155 described above, a main pole excitation type magnetic head may be constructed such that windings are coiled around the main poles 151A, 151B, respectively, without providing the windings 153A, 153'A, 153B, 153'B on the auxiliary poles 154A, 154'A, 154B, 154'B.

Now, a soft magnetic film forming the main recording pole and another magnetic film forming the main reproduction pole in the perpendicular magnetic heads according to the foregoing embodiments will be described. As soft magnetic films for the main recording and reproduction poles amorphous allow materials are utilized. A variety of combinations in composition of the alloy materials is shown in Table 1, where x, y, z represent percentages on an atomic basis and $x + y + z = 100\%$. Within parenthesis is indicated one or a combination of two or more elements.

TABLE 1

| Group of combinations in composition of the alloy materials | |
| --- | --- |
| ① | Co x (Ti, Zr, Hf, Y) y (V, Cr, Mo, W, Ni) z |
| ② | Co x (Ti, Zr, Hf, Y) y (Nb , Ta) z |
| ③ | Co x (Fe, Mn) y (Nb, Ta) z |
| ④ | Co x (Fe, Mn) y (Si, B) z |
| ⑤ | Co x (Ti, Zr, Hf, Y) y (Si, B) z |

In Table 1, for example, Group ① represents alloy materials including x atomic percentages of Co (cobalt), y atomic percentages of one or combination of two or more elements, viz. Ti (titanium), Zr (zirconium), Hf (hafnium) and Y (yttrium) and z atomic percentages of one or combination of two or more elements, viz. V (canadium), Cr (chromium), Mo (molybdenum), W (tungsten) and Ni (nickel). Group ③ represents alloy materials including x atomic percentages of Co, y atomic percentages of either or a combination of both of two elements, viz. Fe (iron) and Mn (manganese) and z atomic percentages of either or a combination of both of two elements, viz. Nb (niobium) and Ta (tantalum). Group ⑤ represents alloy materials including x atomic percentages of Co, y atomic percentages of one or a combination of two or more elements, viz. Ti, Zr, Hf and Y and z atomic percentages of either or combination of both of two elements, viz. Si (silicon) and B (boron).

Composition ratios of alloy materials in combination groups shown in Table 1 which are suitable for soft magnetic films forming the main recording and reproduction heads are shown in Table 2.

TABLE 2

| Use / Group | Soft magnetic film of main recording pole | Soft magnetic film of main reproducing pole |
|---|---|---|
| ① | $80 \leqq X \leqq 95$ atomic %<br><br>$5 \leqq Y \leqq 12$<br><br>$0 \leqq Z \leqq 15$ | $70 \leqq X \leqq 80$ atomic %<br><br>$8 \leqq Y \leqq 15$<br><br>$5 \leqq Z \leqq 15$ |
| ② | $80 \leqq X \leqq 95$<br><br>$0 \leqq Y \leqq 15$<br><br>$0 \leqq Z \leqq 20$ | $70 \leqq X \leqq 80$<br><br>$8 \leqq Y \leqq 15$<br><br>$8 \leqq Z \leqq 15$ |
| ③ | $80 \leqq X \leqq 90$<br><br>$0 \leqq Y \leqq 10$<br><br>$10 \leqq Z \leqq 20$ | $70 \leqq X \leqq 80$<br><br>$1 \leqq Y \leqq 5$<br><br>$10 \leqq Z \leqq 20$ |
| ④ | $75 \leqq X \leqq 90$<br><br>$0 \leqq Y \leqq 15$<br><br>$10 \leqq Z \leqq 25$ | $65 \leqq X \leqq 75$<br><br>$3 \leqq Y \leqq 12$<br><br>$10 \leqq Z \leqq 25$ |
| ⑤ | $80 \leqq X \leqq 95$<br><br>$0 \leqq Y \leqq 20$<br><br>$10 \leqq Z \leqq 25$ | $70 \leqq X \leqq 80$<br><br>$5 \leqq Y \leqq 15$<br><br>$10 \leqq Z \leqq 25$ |

When being formed of an amorphous alloy having comosition ratios shown in Table 2, a main recording pole has a magnetostriction of zero and a high saturation magnetization and a main reproduction pole has a magnetostriction of zero and a high initial permeability. By way of example, in Table 2, when a soft magnetic film of main recording poles is formed of an alloy having a composition of the group ①, atomic % of 80 to 95 of Co, atomic % of 5 to 12 of one or more elements of Ti, Zr, Hf and Y and atomic % of 0 to 15 of one or more elements of V, Cr, Mo, W and Ni is preferably selected. Such alloy materials of these composition ratios have a magnetostriction of zero and a high saturation magnetization suitable for a main recording pole. When a soft magnetic film of main reproduction pole is formed of an alloy having a composition of the group ③, atomic % of 70 to 80 of Co, atomic % of 1 to 5 of either or both of the two elements Fe and Mn and atomic % of 10 to 20 of either or both of the two elements, Nb and Ta is preferably selected. Such alloy materials of these composition ratios have a magnetostriction of zero and a high initial permeability suitable for a main reproduction pole.

In the present invention, amorphous alloys of any combination of composition ratios shown in Table 2 can be used for forming the main recording and reproduction poles. According to experiments for example, a composition ratio of atomic % of 91.6 of Co, atomic % of 2.7 of Zr and atomic % of 5.7 of Nb is preferable as the main recording pole and a composition ratio of atomic % of 78 of Co, atomic % of 11 of Zr and atomic % of 11 of Mo is preferable as the main reproduction pole.

It is to be also noted that main recording and reproduction poles utilized in the present invention are easily formed by sputtering alloy materials shown in Tables 1 and 2 to a thickness less than 1 µm, for example.

## EP 0 153 037 B1

### Claims

1. A perpendicular magnetic head comprising a first main pole for recording information and a second main pole for reproducing information characterised in that said first main pole (11a, 21a, 31a, 41a, 51a, 61a, 71a, 81a, 91a, 101a, 111a, 121a, 131a, 141a, 151a), contains a soft magnetic film with a relatively high saturation magnetization and in that said second main pole (11b, 21b, 31b, 41b, 51b, 61b, 71b, 81b, 91b, 101b, 111b, 121b, 131b, 141b, 151B), contains a soft magnetic film with a relatively high initial permeability and is disposed at a predetermined distance from said first main pole.

2. A perpendicular magnetic head in accordance with claim 1, in which said first and second main poles (11a, 11b; 21a, 21b; 31a, 31b;, 41a, 41b; 61a, 61b; 71a, 71b; 91a, 91b; 111a, 111b; 121a, 121b; 131a, 131b; 141a, 141b) are formed on a common support (10, 20, 30, 40, 60, 70, 80, 90, 100, 110, 120, 130, 140).

3. A perpendicular magnetic head in accordance with claim 2, in which said support (10, 20, 30, 40, 90, 100, 110, 120, 130, 140) is rotatably mounted for pivoting about an axis (10a, 20a, 30a, 40a, 90a, 100a, 110a, 120a, 130a, 140a).

4. A perpendicular magnetic head in accordance with claim 3, in which said first and second main poles (11a, 11b; 21a, 21b; 91a, 91b; 111a, 111b) are disposed symmetrically with respect to said axis (10a, 20a, 90a, 110a).

5. A perpendicular magnetic head in accordance with claim 3, in which said first and second main poles (31a, 31b; 41a, 41b; 101a, 101b; 121a, 121b; 131a, 131b; 141a, 141b) are disposed angularly spaced from each other at a predetermined angle about said axis (30a, 40a, 100a, 120a, 130a, 140a).

6. A perpendicular magnetic head in accordance with claim 3, in which said support (10, 20, 90, 110, 130, 140) is formed as a pseudo-parallelepiped shaped block.

7. A perpendicular magnetic head in accordance with claim 3 or 5, in which said support (30, 40, 100) includes a first arm part having said first main pole (31a, 41a, 101a) thereon and a second arm part having said second main pole (31b, 41b, 101b) thereon, both the first and second arm parts being angularly spaced from each other at a predetermined angle about said axis (30a, 40a, 101a) which intersects a common root of said arm parts.

8. A perpendicular magnetic head in accordance with claim 1, in which said first main pole (51a) is disposed on a first support (50a) movably mounted by a first moving means, and said second main pole (51b) is disposed on a second support (50b) movably mounted by a second moving means.

9. A perpendicular magnetic head in accordance with claim 8, in which at least one of said moving means includes a piezo-electric substance (57a, 57b).

10. A perpendicular magnetic head in accordance with claim 1, in which said head further comprises an auxiliary pole (14, 34, 64, 74, 84) corresponding to said main poles.

11. A perpendicular magnetic head in accordance with claim 10, in which said auxiliary pole (64) is movably mounted by a moving means so as to move between a first and a second position, said first position being complementary to said first main pole (61a) and said second position being complementary to said second main pole (61b).

12. A perpendicular magnetic head in accordance with claim 10, in which said first and second main poles (71a, 71b) are formed on a single support (70) movably mounted by a moving means so as to move between first and second positions, so that at said first position, said first main pole (71a) opposes to said auxiliary pole (74) and, at said second position, said second main pole (71b) opposes said auxiliary pole (74).

13. A perpendicular magnetic head in accordance with claim 11, in which said moving means includes a piezo-electric substance (67).

14. A perpendicular magnetic head in accordance with claim 12, in which said moving means includes a piezo-electric substance (77).

15. A perpendicular magnetic head in accordance with claim 1, in which said first main pole (151A) is formed en block with an auxiliary pole (150A, 150'A), and said second main pole (151B) is formed en block with an auxiliary pole (150B, 150'B).

### Patentansprüche

1. Senkrechter Magnetkopf mit einem ersten Hauptpol zur Aufzeichnung von Informationen und einem zweiten Hauptpol zur Wiedergabe von Informationen, dadurch gekennzeichnet, daß der erste Hauptpol (11a, 21a, 31a, 41a, 51a, 61a, 71a, 81a, 91a, 101a, 111a, 121a, 131a, 141a, 151A) einem weichmagnetischen Film mit einer relativ hohen Sättigungsmagnetisierung enthält und daß der zweite Hauptpol (11b, 21b, 31b, 41b, 51b, 61b, 71b, 81b, 91b, 101b, 111b, 121b, 131b, 141b, 151B) einen weichmagnetischen Film mit einer relativ hohen Anfangspermeabilität aufweist und in einem vorbestimmten Abstand von dem ersten Hauptpol angeordnet ist.

2. Senkrechter Magnetkopf nach Anspruch 1, bei dem der erste und zweite Hauptpol (11a, 11b; 21a, 21b; 31a, 31b;, 41a, 41b; 61a, 61b; 71a, 71b; 91a, 91b; 111a, 111b; 121a, 121b; 131a, 131b; 141a, 141b) auf einem gemeinsamen Träger (10, 20, 30, 40, 60, 70, 80, 90, 100, 110, 120, 130, 140) gebildet sind.

3. Senkrechter Magnetkopf nach Anspruch 2, bei dem der Träger (10, 20, 30, 40, 90, 100, 110, 120, 130,

11

140) drehbar zur Schwenkung um eine Achse (10a, 20a, 30a, 40a, 90a, 100a, 110a, 120a, 130a, 140a) befestigt ist.

4. Senkrechter Magnetkopf nach Anspruch 3, bei dem der erste und zweite Hauptpol (11a, 11b; 21a, 21b; 91a, 91b; 111a, 111b) symmetrisch bezüglich der Achse (10a, 20a, 90a, 110a) angeordnet sind.

5. Senkrechter Magnetkopf nach Anspruch 3, bei dem der erste und zweite Hauptpol (31a, 31b; 41a, 41b; 101a, 101b; 121a, 121b; 131a, 131b; 141a, 141b) winkelmäßig voneinander um einen vorbestimmten Winkel um die Achse (30a, 40a, 100a, 120a, 130a, 140a) beabstandet angeordnet sind.

6. Senkrechter Magnetkopf nach Anspruch 3, bei dem der Träger (10, 20, 90, 110, 130, 140) als ein pseudo-parallelepiped-förmiger Block gebildet ist.

7. Senkrechter Magnetkopf nach Anspruch 3 oder 5, bei dem der Träger (30, 40, 100) einen ersten Arm mit dem ersten Hauptpol (31a, 41a, 101a) daran und einen zweiten Arm mit dem zweiten Hauptpol (31b, 41b, 101b) daran aufweist, wobei das erste und zweite Armteil voneinander winkelmäßig um einen vorbestimmten Winkel um die Achse (30a, 40a, 101a) beabstandet angeordnet sind, die eine gemeinsame Wurzel der Armteile schneidet.

8. Senkrechter Magnetkopf nach Anspruch 1, bei dem der erste Hauptpol (51a) auf einem ersten Träger (50a) angeordnet ist, der von einer ersten Bewegungseinrichtung bewegbar gehaltert ist, und der zweite Hauptpol (51b) auf einem zweiten Träger (50b) angeordnet ist, der von einer zweiten Bewegungseinrichtung bewegbar gehaltert ist.

9. Senkrechter Magnetkopf nach Anspruch 8, bei dem mindestens eine der Bewegungseinrichtungen eine piezoelektrische Substanz (57a, 57b) enthält.

10. Senkrechter Magnetkopf nach Anspruch 1, bei dem der Kopf weiterhin einen Hilfspol (14, 34, 64, 74, 84) enthält, der den Hauptpolen entspricht.

11. Senkrechter Magnetkopf nach Anspruch 10, bei dem der Hilfspol (64) von einer Bewegungseinrichtung bewegbar angeordnet ist, so daß er sich zwischen einer ersten und zweiten Position bewegt, wobei die erste Position dem ersten Hauptpol (61a) komplementär und die zweite Position dem zweiten Hauptpol (61b) komplementär ist.

12. Senkrechter Magnetkopf nach Anspruch 10, bei dem der erste und zweite Hauptpol (71a, 71b) auf einem einzigen Träger (70) gebildet sind, der von einer Bewegungseinrichtung bewegbar gehaltert ist, so daß er sich zwischen einer ersten und zweiten Position bewegt, so daß in der ersten Position der erste Hauptpol (71a) dem Hilfspol (74) und in der zweiten Position der zweite Hauptpol (71b) dem Hilfspol (74) gegenüberliegt.

13. Senkrechter Magnetkopf nach Anspruch 11, bei dem die Bewegungseinrichtung eine piezoelektrische Substanz (67) enthält.

14. Senkrechter Magnetkopf nach Anspruch 12, bei dem die Bewegungseinrichtung eine piezoelektrische Substanz (77) enthält.

15. Senkrechter Magnetkopf nach Anspruch 1, bei dem der erste Hauptpol (151A) en bloc mit einem Hilfspol (150A, 150'A) und der zweite Hauptpol (151B) en bloc mit einem Hilfspol (150B, 150'B) gebildet ist.

**Revendications**

1. Une tête magnétique perpendiculaire comprenant un premier pôle principal pour enregistrer une information et un second pôle principal pour reproduire une information, caractérisée en ce que ledit premier pôle principal (11a, 21a, 31a, 41a, 51a, 61a, 71a, 81a, 91a, 101a, 111a, 121a, 131a, 141a, 151A) contient un film magnétique doux ayant une magnétisation de saturation relativement grande et en ce que ledit second pôlee principal (11b, 21b, 31b, 41b, 51b, 61b, 71b, 81b, 91b, 101b, 111b, 121b, 131b, 141b, 151B) contient un film magnétique doux ayant une perméabilité initiale relativement grande et est disposé à une distance prédéterminée dudit premier pôle principal.

2. Une tête magnétique perpendiculaire selon la revendication 1, dans laquelle lesdits premier et second pôles principaux (11a, 11b; 21a, 21b; 31a, 31b;, 41a, 41b; 61a, 61b; 71a, 71b; 91a, 91b; 111a, 111b; 121a, 121b; 131a, 131b; 141a, 141b) sont formés sur un support commun (10, 20, 30, 40, 60, 70, 80, 90, 100, 110, 120, 130, 140).

3. Une tête magnétique perpendiculaire selon la revendication 2, dans laquelle ledit support (10, 20, 30, 40, 90, 100, 110, 120, 130, 140) est monté de façon tournante pour pivoter autour d'un axe (10a, 20a, 30a, 40a, 90a, 100a, 110a, 120a, 130a, 140a).

4. Une tête magnétique perpendiculaire selon la revendication 3, dans laquelle lesdits premier et second pôles principaux (11a, 11b; 21a, 21b; 91a, 91b; 111a, 111b) sont disposés symétriquement par rapport audit axe (10a, 20a, 90a, 110a).

5. Une tête magnétique perpendiculaire selon la revendication 3, dans laquelle lesdits premier et second pôles principaux (31a, 31b; 41a, 41b; 101a, 101b; 121a, 121b; 131a, 131b; 141a, 141b) sont disposés angulairement en étant espacés l'un de l'autre selon un angle prédéterminé par rapport audit axe (30a, 40a, 100a, 120a, 130a, 140a).

6. Une tête magnétique perpendiculaire selon la revendication 3, dans laquelle ledit support (10a, 20, 90, 110, 130, 140) est profilé comme un bloc en forme de pseudo-parallélépipède.

7. Une tête magnétique perpendiculaire selon la revendication 3 ou 5, dans laquelle ledit support (30, 40, 100) comprend une première partie formant un bras et comportant ledit premier pôle principal (31a,

41a, 101a) et une seconde partie formant un bras comportant ledit second pôle principal (31b, 41b, 101b), lesdites première et seconde parties formant bras étant espacées angulairement l'une de l'autre d'un angle prédéterminé par rapport audit axe 30a, 40a, 101a) qui coupe une base commune desdites parties formant bras.

8. Une tête magnétique perpendiculaire selon la revendication 1, dans laquelle ledit premier pôle principal (51a) est disposé sur un premier support (50a) monté de façon à pouvoir être déplacé par un premier moyen d'entraînement et ledit second pôle principal (51b) est disposé sur un second support (50b) monté de façon à pouvoir être déplacé par un second moyen d'entraînement.

9. Une tête magnétique perpendiculaire selon la revendication 8, dans laquelle un desdits moyens d'entraînement comprend une substance piezo-électrique (57a, 57b).

10. Une tête magnétique perpendiculaire selon la revendication 1, dans laquelle ladite tête comprend en outre un pôle auxiliaire (14, 34, 64, 74, 84) correspondant auxdits pôles principaux.

11. Une tête magnétique perpendiculaire selon la revendication 10, dans laquelle ledit pôle auxiliaire (64) est monté de façon à pouvoir être déplacé par un moyen d'entraînement afin d'être déplacé entre une première et une seconde position, ladite première position étant complémentaire dudit premier pôle principal (61a) et ladite seconde position étant complémentaire dudit second pôle principal (61b).

12. Une tête magnétique perpendiculaire selon la revendication 10, dans laquelle lesdits premier et second pôles principaux (71a, 71b) sont formés sur un seul support (70) monté de façon à pouvoir être déplacé par un moyen d'entraînement afin d'être déplacé entre une première et une seconde position de telle sorte que, dans ladite première position, ledit premier pôle principal (71a) soit placé en regard dudit pôle auxiliaire (74) et que, dans ladite seconde position, ledit second pôle principal (71b) soit placé en regard dudit pôle auxiliaire (74).

13. Une tête magnétique perpendiculaire selon la revendication 11, dans laquelle ledit moyen d'entraînement comprend une substance piezo-électrique (67).

14. Une tête magnétique perpendiculaire selon la revendication 12, dans laquelle ledit moyen d'entraînement comprend une substance piezo-électrique (77).

15. Une tête magnétique perpendiculaire selon la revendication 1, dans laquelle ledit premier pôle principal (151A) est réalisé en formant un bloc avec un pôle auxiliaire (150A, 150'A) et ledit second pôle principal (151B) en formant un bloc avec un pôle auxiliaire (150B, 150'B).

# F I G. 1

# F I G. 2A

WIDE

# F I G. 2B

NARROW

# F I G. 3

FIG. 4

WP

11b

10

2

A

15

10a

2a

2c

11a

2b

WR

13

14

FIG. 5

180° ROTATION

23b

21b

20

20a

25

23a

2

21a

2a

A

2c

2b

FIG. 6

θ

30

30a

35

31b

2

31a

d

2a

A

33

34

FIG. 7

θ

40a

43b

40

45

41b

43a

41a

2

2a

2c

2b

2

F I G. 8

F I G. 9

F I G. 10

F I G. 11

F I G. 12

F I G. 13

FIG. 14

FIG. 15

FIG. 16

FIG. 17

FIG. 18

FIG. 19

FIG. 20

TRACK
WIDTH